# EUROPEAN PATENT APPLICATION

(11) **EP 2 851 792 A1**
(43) Date of publication of application: **25.03.2015**
(21) Application number: 14175466.3
(22) Date of filing: 02.07.2014
(51) Int. Cl.: G06F 9/44

(54) **Solid state drives that cache boot data**

(30) Priority: 23.09.2013 IN CH43092013
(71) Applicant: LSI Corporation, Milpitas, CA 95035 (US)
(72) Inventor: Kumar, Amit, 560103 Bangalore, KA (IN); Venkatsha, Pradeep R., 560029 Bangalore, KA (IN)
(74) Representative: Dilg, Haeusler, Schindelmann Patentanwaltsgesellschaft mbH

(57) **Abstract**

Methods and structure for utilizing a Solid State Drive (140) to enhance boot time for a computer (100). The computer includes a Solid State Drive that stores a boot cache for an Operating System of a computer, a Hard Disk Drive (130) that stores the Operating System, and a processor (110). The processor is able to load an interrupt handler that intercepts Input/Output requests directed to the Hard Disk Drive prior to loading a kernel of the Operating System. The interrupt handler is able to determine whether each intercepted request can be serviced with data from the boot cache, and to redirect a request to the Solid State Drive instead of the Hard Disk Drive if the request can be serviced with data from the boot cache.

## Description

### Cross Reference to Related Applications

This document claims priority to Indian Patent Application No.4309/CHE/2013(filed on September 23, 2013) entitled SOLID STATE DRIVES THAT CACHE BOOT DATA.

### Field of the Invention

The invention relates generally tocomputers, and more specificallyboot processes for computers.

### Background

Computer systems that boot quicklyhave become particularly desirable in the marketplace. Consumers expect a boot speed from general purpose computers that is similar to the boot speeds of tablets and cellular phones, even though such devicesuse substantially less complex Operating Systems (OSs) than general purpose computers. Spinning/rotatable magnetic disk drives (also known as Hard Disk Drives, or HDDs) are used in many general purpose computers for mass storage, but these HDDs contribute to slow boot times. HDDshave substantial latency delays when retrieving data, as well as low data transfer rates when processing Input/Output (I/O) requests.Other storage technologies such as Solid-State Drives (SSDs) provide substantially faster access speeds and transfer rates than conventional HDDs. However, it is often cost-prohibitive to use SSDs for mass storage, because SSDs that have similar storage capacities to conventional HDDs are substantially more expensive.

### Summary

Systems and methods herein utilize an SSD in order to enhance the boot speed of general purpose computers that haveHDDs. The SSD stores aboot cache in order to service, for example, incoming I/O boot requests for the OS that use the BIOS interface to access the HDD. The cache can even service I/O requests that are received before theOS kernel (also known as an I/O stack) for the computer is initialized. Since the boot I/O requests are processed via the SSD instead of the HDD, the boot processes occur significantly faster than if only the HDD had been used.

One exemplary embodiment is acomputer. The computer includes an SSD that stores a boot cache for an Operating System, a Hard Disk Drive that stores the Operating System, and a processor. The processor is able to load an interrupt handler that intercepts Input/Output requests directed to the Hard Disk Drive prior to loading a kernel of the Operating System. The interrupt handler is able to determine whether each intercepted request can be serviced with data from the boot cache, and to redirect a request to the SSD instead of the Hard Disk Drive if the request can be serviced with data from the boot cache.

Other exemplary embodiments (e.g., methods and computer readable media relating to the foregoing embodiments)arealso described below.

### Brief Description of the Figures

Some embodiments of the present invention are now described, by way of example only, and with reference to the accompanying figures. The same reference number represents the same element or the same type of element on all figures.
FIG. 1 is a block diagram of an exemplary computer that utilizes a Solid State Drive (SSD) boot system.
FIG. 2 is a diagram illustrating exemplary boot processes in a computer.
FIG. 3 is a flowchart describing an exemplary method foroperating an SSD boot system.
FIG. 4 is a block diagram illustrating an exemplary RAM layout of acache for a BIOS disk interrupt handler.
FIG. 5is a block diagram illustratingan exemplary boot cacheof an SSD.
FIG. 6is a block diagram illustratingan exemplary cache metadata table for a boot cache of an SSD.
FIG. 7 is a block diagram illustrating how hashbuckets can be used to access data in a boot cache stored on an SSD in an exemplary embodiment.
FIG. 8 is a flowchart illustrating a method for using cache buckets to access data in a boot cache stored on an SSD in an exemplary embodiment.
FIG. 9 is a flowchart illustrating an exemplary method for populating tables for a boot cache.

### Detailed Description of the Figures

The figures and the following description illustrate specific exemplary embodiments of the invention. It will thus be appreciated that those skilled in the art will be able to devise various arrangements that, although not explicitly described or shown herein, embody the principles of the invention and are included within the scope of the invention. Furthermore, any examples described herein are intended to aid in understanding the principles of the invention, and are to be construed as being without limitation to such specifically recited examples and conditions. As a result, the invention is not limited to the specific embodiments or examples described below, but by the claims and their equivalents.

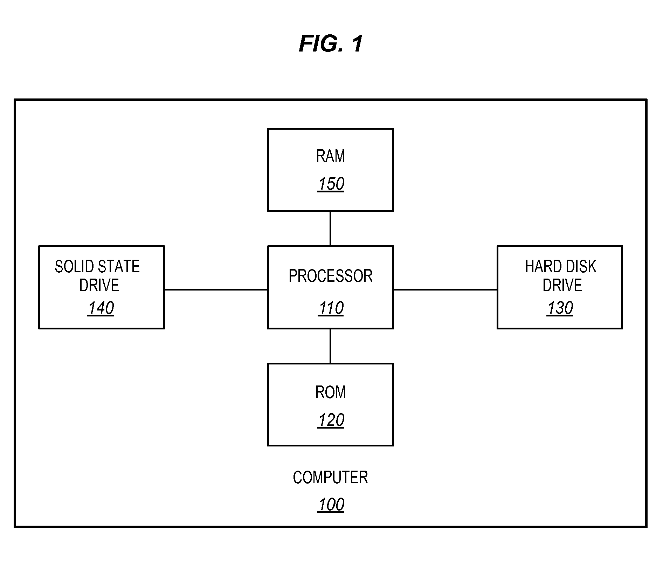

FIG. 1 is a block diagram of an exemplary computer 100 that utilizes a Solid State Drive (SSD) boot system. Computer 100, when powered on and booted up, enables a user to interact with an Operating System (OS) in order to perform a variety of general-purpose computing tasks such as word processing, internet browsing, gaming, etc. In this embodiment, computer 100 includes processor 110, Read-Only Memory (ROM) 120, Hard Disk Drive (HDD) 130, Solid State Drive (SSD) 140, and Random Access Memory (RAM) 150. Computer 100 may also include other devices, interfaces, displays, and components as desired.

When powered on, computer 100 uses SSD 140 as a cache for boot operations. Thus, even before a kernel of the OS of computer 100 has loaded, SSD 140 can speed up the boot process.

Processor 110 operates within computer 100 to perform computing operations based on logical instructions stored in a memory (such as HDD130). These computing operations can be performed by processor 110 in order to boot computer 100, to run one or more applications/services on computer 100, etc. Processor 110 comprises any suitable hardware processor capable of performing logical instructions, and processor 110 can load data into RAM 150 during processing.

ROM 120 stores a Basic Input Output System (BIOS) for computer 100, which is accessed by processor 110 during boot. ROM 120 may comprise any suitable read-only memory, including memories such as Erasable Programmable Read Only Memory (EPROM) and Electrically Erasable Programmable Read Only Memory (EEPROM).

HDD 130 stores a boot record for computer 100, such as a Master Boot Record (MBR). HDD130 may comprise any suitable rotatable/spinning magnetic hard disk drive.Processor 110 accesses code from the boot record while the BIOSis running in order to initialize computer 100.

SSD 140 stores a boot cache for use by the BIOS of computer 100. The cache can be used during the "pre-boot" phase of booting, before the OS kernel for computer 100 has been loaded. The cache itself can be implemented as a write-through or a write-back cache. Implementing a boot cache on SSD 140 is beneficial because SSD 140 has a lower latency and/or a larger data transfer rate than HDD 130. Furthermore, because the boot cache is operated in the pre-boot phase before the OS has loaded, computer 100receives a notable increase in boot speed. SSD 140 comprises any suitable solid state memory capable of implementing a cache for HDD 130. For example, SSD 140 may comprise a Flash memory device.

The particular arrangement, number, and configuration of components described herein is exemplary and non-limiting.

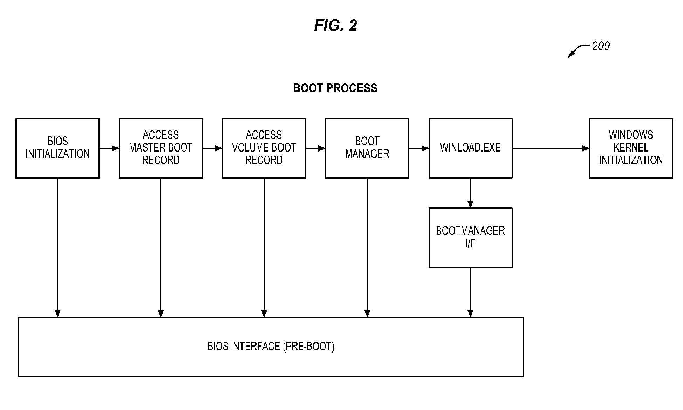

FIG. 2 is a diagram 200 illustrating exemplary boot processes in a computer utilizing a Windows OS. FIG. 2 shows that, during the pre-boot phase while the processor is operating in real mode and before the OS kernel has loaded, the BIOS performs a number of boot operations. These operations include initializing the BIOS, accessing the Master Boot Record and Volume Boot Record, running the boot manager, etc. These pre-boot activities may access a substantial amount of data. However, in systems that usean OS kernel to manage caching(e.g., via a disk class caching filter driver), there is no way of accelerating the pre-boot phase of the boot processand supporting, for example, a write back cache at the SSD to facilitate pre-boot phase operations. This is because no drivers are available during the pre-boot phase in order tomake the SSD available for caching.

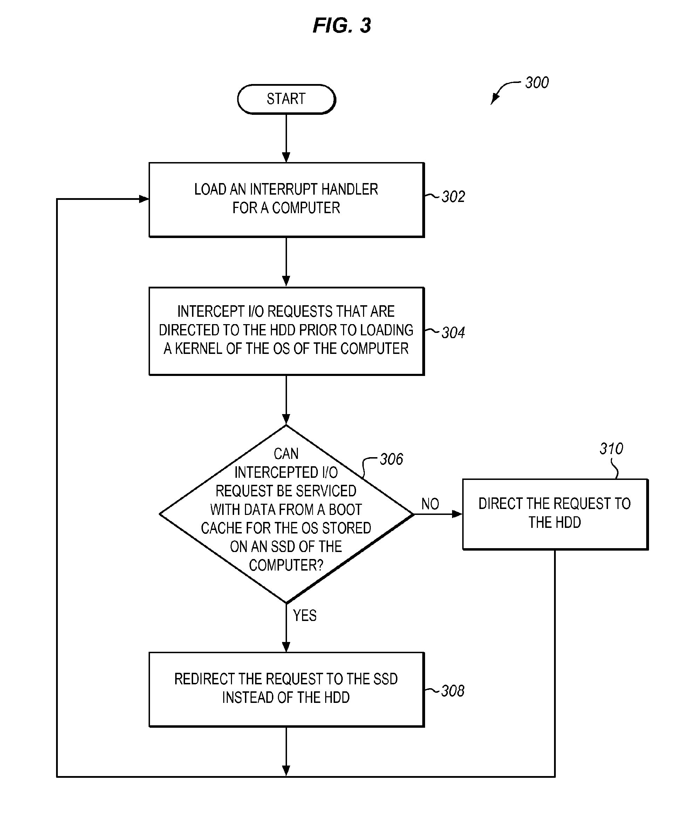

To address this issue, FIG. 3 is a flowchart describing an exemplary method 300 for operating a Solid State Drive (SSD) boot system. Assume, for this embodiment, that a user has just powered computer 100 on, causing processor 110 to initiate operations.Further assume that during this pre-boot process described throughout method 300, processor 110 operates in real mode and/or flat real mode. In real mode, processor 110 has access to a limited amount of memory space in RAM 150. This amount of memory space is typically known as the "low 1MB area" of RAM 150. Flat real mode enables processor 110 to access more of RAM 150 than real mode, but still only enables access to a limited portion of RAM 150.

Processor 110 initializes the BIOS by loading BIOS instructions from ROM 120 into RAM 150.In step 302, processor 110 loads an interrupt handler. The interrupt handler can take the place of a handler that would otherwise be loaded by the BIOS.

In step 304, the interrupt handler interceptsInput/Output (I/O) requests that are directed to HDD 130. This interception process occurs duringthe pre-boot phase of booting, prior to loading a kernel of the OS. Therefore, no disk driver of the OS has been loaded yet, and the OS is not involved in the boot process at this time. In step 306, the interrupt handler determines whether the intercepted I/O request can be serviced with data from the boot cache of SSD 140. If the I/O request can be serviced from SSD 140, then the interrupt handler redirects the request (which was previously targeted to HDD 130) to the boot cache on SSD 140 in step 308. However, if the I/O request is directed to data that is not cached on SSD 140, then in step 310 the interrupt handler directs the request towards HDD 130 (i.e., the interrupt handler does not redirect the request to the SSD).

Assume for this embodiment that after pre-boot completes, the processor permanently switches to virtual mode, and the OS kernel is loaded into RAM 150. The OS then loads its own disk driver, and performs various OS boot processes in order to make computer 100 fully operational.

Using method 300, an SSD boot cache can be utilized to increase the pre-boot speed of a computer that stores an OS on an HDD, even before an OS of the computeris operational. For example, method 300 can be used to operate a cache thatsupports a write back cache policy for boot caching.

Even though the steps of method 300 are described with reference to computer 100 of FIG. 1, method 300 can be performed in other systems. The steps of the flowcharts described herein are not all inclusive and can include other steps not shown. The steps described herein can also be performed in an alternative order.

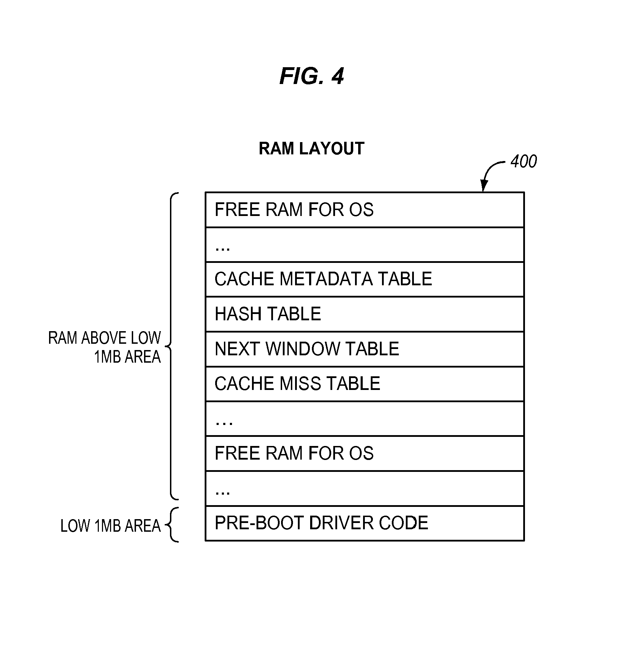

FIG. 4 is a block diagram illustrating an exemplary RAM layout of a cache for a BIOS disk interrupt handler. This RAM layout can be used, for example, while performingmethod 300. According to FIG. 4, pre-boot driver code, used to load the interrupt handler in step 302, is kept in the low 1MB area of RAM 150. Cache tables are also stored in RAM 150, and are used by the interrupt handler to index the cache on SSD 140. In this embodiment, thecache tables are kept in a portion of RAM 150 that can be accessed in flat real mode.

### Examples

In the following examples, additional processes, systems, and methods are described in the context of alaptop computer. The laptop computer includes an SSD which is used to store a boot cache. In this example, the SSD is a 16 Gigabyte (GB) mini Serial Advanced Technology Attachment (mSATA) flash drive. Presently, the boot cache is waiting to be filled with data.

### Setup

In this example, a number of activities have been performed before the initial boot of the laptop in order to enable the laptop to use the cache during boot. Specifically, the SSD has been programmed with a pre-boot driver that will be loaded when the BIOS for the laptop is activated. Additionally, the Master Boot Record (MBR) on an HDD of the laptop has been modified from its original version in order to point to the pre-boot driver that is stored on the SSD. Thus, when the BIOS initially accesses the MBR, it will load the pre-boot driver into RAM, which allows the pre-boot driver to control various pre-boot activities.

The pre-boot driver replaces interrupt handlers normally used by the BIOS with new interrupt handlers that can access the SSD cache. Thus, when the laptop boots, the pre-boot driver can seamlessly take over disk access functions of the BIOS without having to entirely replace the BIOS with custom code. However, when the laptop first boots with the pre-boot driver, it is unknown what data should be cached on the SSD. Therefore, when the laptop is first turned on, the pre-boot driver operates in a learning mode. The learning mode is discussed in further detail below, after the initial boot operations for the laptop are described.

### Initial Boot Operations

To trigger boot operations, a user turns on the laptop by pressing the power button and the laptop activates a Power on Self Test (POST) BIOS phase of the boot. Once the POST BIOS phase has completed, the BIOS calls an INT19h interrupt handler routine, which is an interrupt handler that causes the processor to load a first sectorof the MBR stored on the HDD. This MBR sectorhas been modified to point to thepre-boot driver stored on the SSD of the laptop.

The processor follows the instructions in the MBR and loads the pre-boot driver intoRAM.The pre-boot driver is loaded in real mode for the laptop before the OS kernel image for the laptop is initialized. Because the pre-boot driver is loaded in real mode and prior to the OS kernel being loaded, only 1MB of RAM on the laptop is available for use by the system, of which a small portion is used by the pre-boot driver. This section of RAM is referred to as the "low 1MB area" of the RAM.

Since there is little available space within the low 1MB area of RAM where the pre-boot driver resides, the pre-boot driver takes steps to keep itself from being overwritten during boot. To this end, the pre-boot driver loads a specialized version of the INT12h interrupt handler from the SSD and into RAM.The standard INT12h handler reports the total amount of space in the low 1MB area of RAM. However, the specialized version of the INT12hhandler intentionally misreports the amount of space in RAM in order to effectively hide the memory used by the pre-boot driver so that the driver is not accessed by the BIOS.This ensures that the pre-boot driver will not be accidentally overwritten during boot.

### Learning Mode

After the pre-boot driver protects its memory space in RAM, it starts to manage the cache stored on the SSD. In this example, if the pre-boot driver detects that the SSD cache is empty,the pre-boot driver operates in a "learning mode" (other triggering events may also cause the pre-boot driver to enter learning mode). In the learning mode, cache misses (e.g., for the empty cache) are tracked by the pre-boot driver to determine which Logical Block Addresses (LBAs) of the laptop areaccessedduring boot (e.g., which LBAs were called by INT13h interrupts) and not yet stored in the cache. If the cache is initially empty, each LBA that is accessed during boot will cause a cache miss. The pre-boot driveridentifiesthe missed LBAs in a cache miss table (located in a reserved portion of RAM), and once the OS kernel I/O stack has initialized during boot, a disk class caching filter driver of the OS reads the cache miss table and populates the SSD cache with these LBAs. This allows data for the LBAs to be retrieved from the SSD in the next boot cycle (or later in the current boot cycle).Once the cache is populated (e.g., on subsequent boots, or later on during the first boot), the SSD cache can be used to substantially increase the speed of the boot process.

### I/O Interception and Processing

In order to operate the cache, the pre-boot driveruses a specialized version of the INT13h handlerloadedfrom the SSD, which takes the place of the INT13h handler that would normally be used by the BIOS.The specialized INT13h handler is used to direct I/O requests to the cache as needed.

Specifically, the specialized INT13h handler is capable of receiving I/O requests directed to LBAs on the HDD, and accessing one or more cache tables stored in RAM to determine whether or not each requested LBA is already cached in the SSD. If an LBA is already cached, thespecialized INT13h handler directs the request to the cache on the SSD, instead of directing the request to the HDD.

In order to facilitate the operations of the INT13h handler, the pre-boot driver loads a cachemetadata table from the SSD, and constructs lookup tables(e.g., hash and next window tables) using the information stored in the cache metadata table. The pre-boot driver furtherstores the lookup tables in RAM in order for the specializedINT13h handler to quickly determine whether requested data is cached on the SSD or not. In performing a cache lookup for an I/O request, the revised INT13h handler may switch from real mode to flat real mode in order to read the lookuptables. For example, if the lookup tables are stored outside of the low 1MB area of RAM, the revised INT13h handler may switch to flat real mode to access the tables, and may then switch back to real mode before processing/intercepting the next request.

In order to keep the pre-boot driver (as well as any corresponding drivers and tables)reserved in RAM without being overwritten, the pre-boot driver also loads a revised version of the INT15h handler, which takes the place of the INT15h handler that would normally be used by the BIOS. The INT15h handler is normally used by the BIOS to report the amount of free space left in RAM for the laptop. Instead of reporting back the amount of free space unused by just the BIOS, the revised INT15h handler reports back the amount of available free space left that has not been used by both the BIOS, the pre-boot driver, specialized interrupt handlers and various pre-boot driver tables(e.g., cache metadata tables,lookup tables, etc.). At this time, the OS kernel still has not yet been loaded at the laptop.

In order to maintain and update the cache after pre-boot operations have completed, a disk class caching filter driver of the OS maintains tables for the cache that indicate how often each cache entry has been accessed, as well as how often cache misses have occurred for specific LBA ranges. If a cache entry/window for an LBA range has not been accessed more than a threshold number of times (e.g., per boot, per unit time, etc.), and another uncached LBA has been subject to a large number of cache misses, then the filter driver can fill the cache entry with data from the uncached LBA. For example, if the number of cache misses for the uncached LBA is greater than the total number of accesses for the cached LBA, the filter driver may replace the cached LBA data in the cache entry with theuncached LBA data.

### SSD Cache Structure

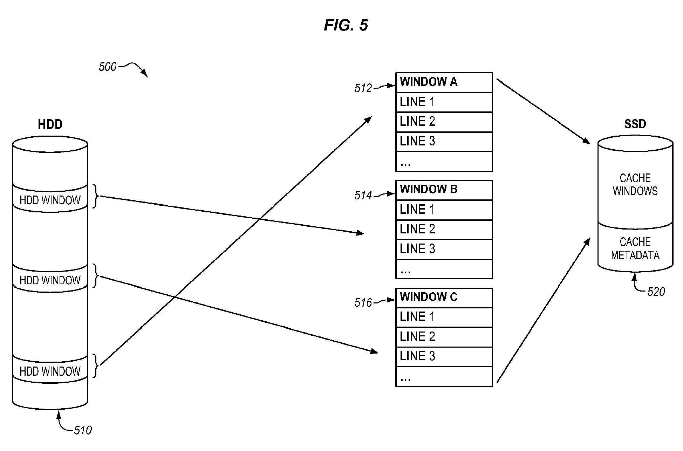

FIG. 5is a block diagram 500 illustratingan exemplary boot cache 520 for an SSD. In this example, boot cache 520 stores data from HDD 510. HDD 510 is divided into multiple "HDD windows." An HDD window is a contiguous range of LBAs on HDD 510. In this example, a given HDD window always represents the same range of LBAs. Individual cache windows (e.g., windows 512, 514, and 516) store data for individual HDD windows. In this example, windows 512, 514, and 516 each store data for a different HDD window. In this example, each cache window (1MB) is subdivided into sixteen cache lines (64KB), and stores data for a single HDD window (1MB).

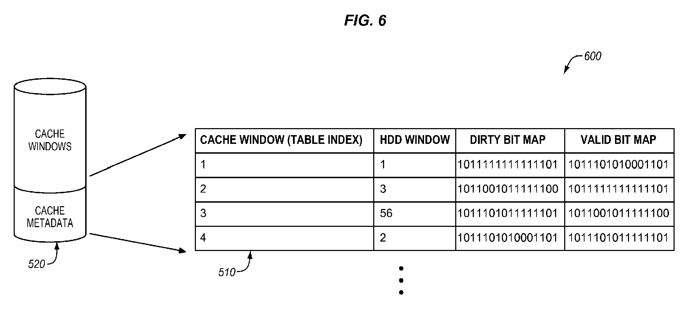

As a part of managing the cache (e.g., after boot processes have completed), the filter driver may replace the data in a cache window in order for the cache windowto represent a different HDD window. For example, if a cache window stores data for an unpopular range of LBAs, the data in the cache window may be flushed and replaced with data for a different range of LBAs.In one embodiment, OS boot data populated in the cache (e.g., based ona cache miss table) is pinned in the cache and made read-only. This ensures that the OS boot data cannot be flushed/replaced, meaning that the boot data will always present in the cache to accelerate the boot cycle.Cache 520 also includes a metadata region, described with regard to FIGS. 6-7 below.

FIG. 6 is a block diagram illustrating an exemplary cache metadata table for a boot cache of an SSD. According to FIG. 6, since the pre-boot driver hides a portion of RAM from the OS in order to reserve various tables(e.g., cache metadata tables, hash tables,etc.), it may be desirable to ensure that the memory footprint of each of these pre-boot tables is fairly small. This ensures that the usable/visible portion of RAM is not substantially reduced.

One system for keeping metadatatable 610 is by not using a linked list with pointers to point toindividual cache windows. Instead, each index/entryof metadata table610 is tied, by its index number, to a specific cache window. Each entry of metadata table 610 also includes an indicator thatdescribesthe HDD window presentlystoredin the indexed cache window. A dirty bit map and a valid bit map are used to indicate which lines of the cache window are dirty and/or valid at the cache.

Metadata table 610 can be used to quickly determine which HDD window is stored in a given cache window, as well as what cache lines in the cache window are valid and/or dirty.

### Hash Buckets for Accessing Cache Windows

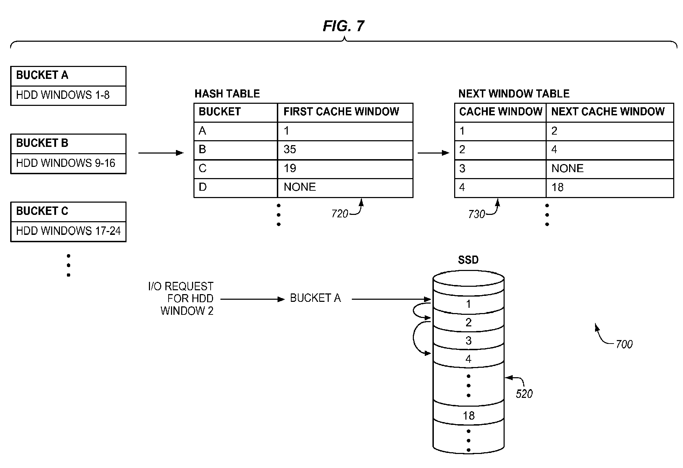

FIG. 7 is a block diagram illustrating how hash buckets can be used to access data in a boot cache stored on an SSD in an exemplary embodiment. Hash buckets can be used to quickly determine, based on a known HDD window, if there is a cache window that stores data for the HDD window. In this example, each hash bucket statically represents a contiguous range of eight HDD windows. The hash buckets can be identified using hash table 720. Hash table 720 points to the first cache window in metadata table 610 that stores data for any of the HDD windows in each hash bucket.Next window table 730, when indexed by cache window number, can be used to indicate a series of other cache windows that also store data for the same hash bucket.

Assume, for this example, that an incoming I/O request is directed to the LBAs of HDD window 2. The pre-boot driver determines that this I/O request is therefore directed to hash bucket A. The pre-boot driver then reviews the first cache window listed in the hash table for hash bucket A, which is cache window 1. The pre-boot driver then accesses metadata table 610, and determines that cache window 1 stores data for HDD window 1, not HDD window 2. Therefore, the pre-boot driver accesses next cache window table 730. Next cache window table 730 shows cache window 2 should be accessed after cache window 1. Upon consulting metadata table 610 again to check on cache window 2, the pre-boot driver determines that cache window 2 also does not store data for the correct HDD window. Therefore, processing continues, and next cache window table 730 shows that cache window 4 should be accessed next. Cache window 4 stores the data for the requested HDD window, and therefore is accessed to service the I/O request.

The processor can continue to check cache windows using next table window 730 until the appropriate cache window is found, or until it determines that no cache window for the hash bucket currently stores the requested HDD window. If no cache window presently stores the requested HDD window, then a cache miss occurs.

Using a system of cache buckets instead of pointers can allow the cache lookup table to be used while the processor of the laptop operates in real mode. Specifically, the bucket system avoids the use of dynamic memory allocation and 32-bit pointers in real mode.Also, cache bucket technique does not utilize memory-intensive pointers or linked lists, which occupy a great deal of space in RAM.

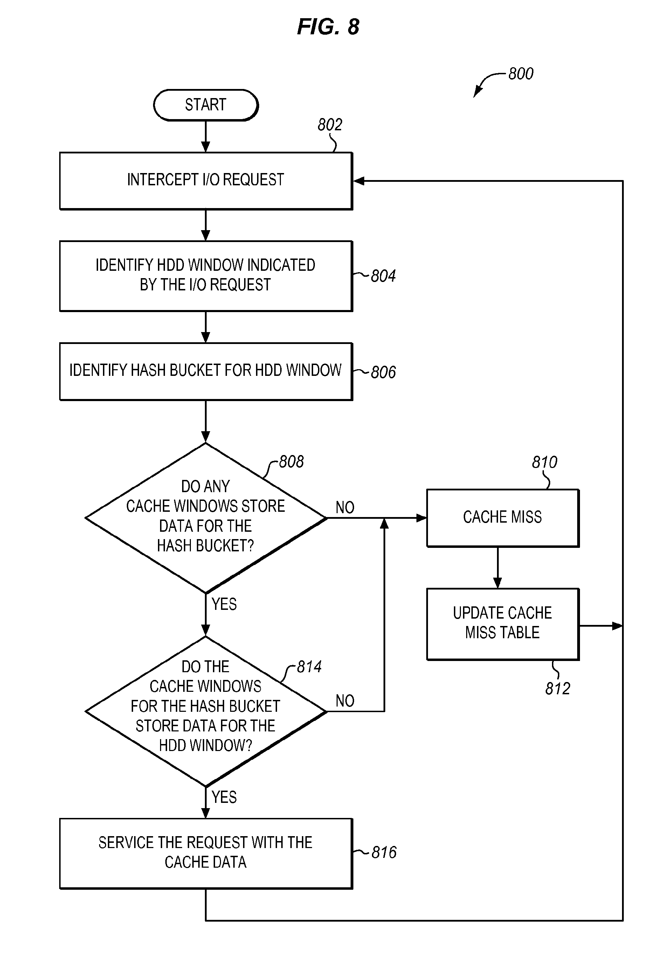

FIG. 8 is a flowchart illustrating a method for using cache buckets to access data in a boot cache stored on an SSD in an exemplary embodiment. According to FIG. 8, an incoming request is first intercepted by the specialized INT13h handler in step 802. In step 804, the interrupt handler identifies the HDD window indicated by the request, and in step 806, the interrupt handler determines which hash bucket the HDD window is in. The interrupt handler then consults the hash table to determine if any cache windows store data for the hash bucket in step 808. If not, then a cache miss occurs in step 810, and the cache miss table is updated in step 812.

Alternatively, if the hash table indicates a cache window that stores data for the identified hash bucket, then processing continues to step 814. In step 814, the interrupt handler looks up the cache window in the metadata table, and determines whether the indicated cache window (or a cache window linked to the indicated cache window in the next window table) stores data for the requested HDD window. If so, then the request is serviced using the data from the cache window in step 816. If not, then the interrupt handler determines a next cache window from the next window table, checks the next cache window using the metadata table, and so on. If no cache window is found that points to the HDD window, then a cache miss occurs in step 810.

### Populating a Hash Table

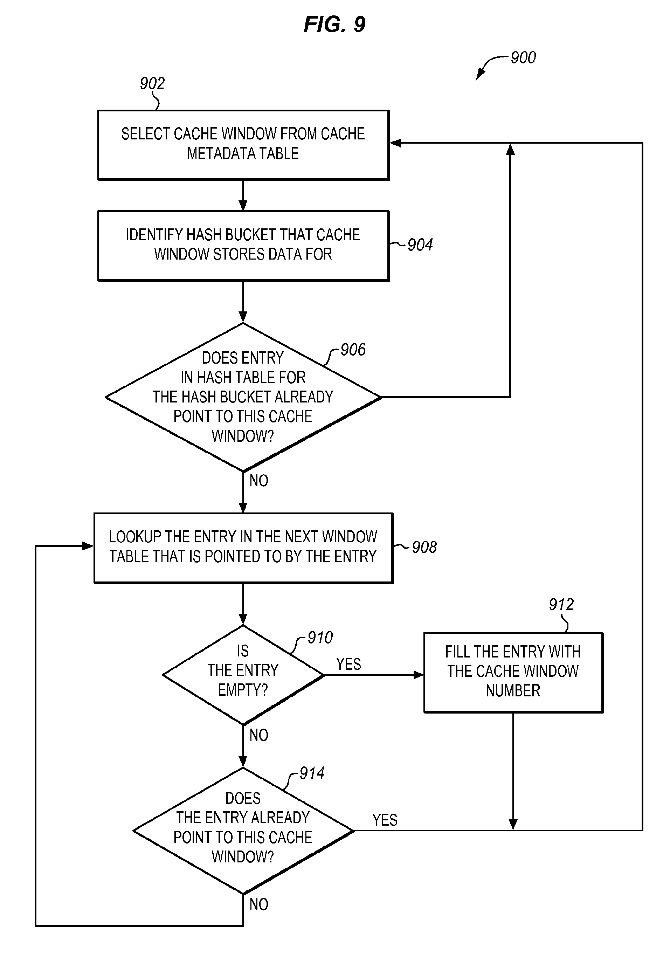

FIG. 9 is a flowchartillustrating an exemplary method 900 for populating hash tables for a boot cache. According to FIG. 9, the pre-boot driver initializes by selecting a cache window from the metadata table in step 902. The pre-boot driver then identifies a hash bucket that the cache window stores data for in step 904. In step 906, the pre-boot driver determines whether an entry in the hash table already points to the current cache window. If so, then the cache window is already properly referenced and another cache window can be selected.

However, if the cache window is not pointed to by the hash table entry, then processing continues to step 908, where the pre-boot driver looks up the entry in the next window table that is pointed to by the previous entry (in this case, the hash table entry). If the entry in the next window table is empty in step 910, then in step 912 the pre-boot driver fills the empty entry with the index of the cache window. However, if the entry is not empty, the pre-boot driver determines whether the entry points to the current cache window in step 914. If so, then the current cache window is properly referenced, and another cache window can be selected. However, if the entry points to a different cache window, the pre-boot driver looks up the cache window in the next window table in step 908, to review whether the current cache window is referenced in that location. This process can continue until the entire cache metadata table has been reviewed.

## Claims

1. A computer (100), the computer **characterized in that** it comprises:
a Solid State Drive (140) that stores a boot cache for an Operating System of the computer;
aHard Disk Drive (130) that stores the Operating System; and
a processor (110) operable to load aninterrupt handler thatinterceptsInput/Output requests directed to the Hard Disk Driveprior to loading a kernel of the Operating System,
the interrupt handler is operable to determine whether each intercepted request can be serviced with data from the boot cache, and to redirect a request to the Solid State Drive instead of the Hard Disk Drive if the request can be serviced with data from the boot cache.

2. The computer of claim 1, wherein:
the interrupt handler takes the place of an INT13h interrupt handler of a Basic Input Output System of the computer.

3. The computer of claim 1, wherein:
the interrupt handler is further operable to intercept the Input/Output requests while the computer is operating in real mode.

4. The computer of claim 1, wherein:
the processor is further operable to load the interrupt handler into a low one megabyte area of Random Access Memory (150).

5. The computer of claim 1, wherein:
the processor is further operable toload an additional interrupt handler that takes the place of an INT15h interrupt handler of aBasic Input Output System of the computer, and the additionalinterrupt handler is operable to indicate that space taken in Random Access Memory (150) by the interrupt handlersis not available for overwriting.

6. A method, the method **characterized in that** it comprises:
loading an interrupt handler for a computer, wherein the computer includes a Hard Disk Drive that stores an Operating System (302);
intercepting, with the interrupt handler, an Input/Output request directed to theHard Disk Drive of a computer, prior to loading a kernel of the Operating System (304);
determining whether the intercepted request can be serviced with data from a boot cache for the Operating System stored on a Solid State Drive of the computer (306); and
redirectingthe request to the Solid State Drive instead of the Hard Disk Drive if the request can be serviced with data from the boot cache (308).

7. The method of claim 6, wherein:
the interrupt handler takes the place of an INT13h interrupt handler of a Basic Input Output System of the computer.

8. The method of claim 6, further comprising:
intercepting the Input/Output requests with the interrupt handler while the computer is operating in real mode.

9. The method of claim 6, further comprising:
loading the interrupt handler into a low one megabyte area of Random Access Memory.

10. The method of claim 6, further comprising:
loading an additional interrupt handler that takes the place of an INT15h interrupt handler of a Basic Input Output System of the computer, wherein the additional interrupt handler indicates that space taken in Random Access Memory by the interrupt handlers is not available for overwriting.
